# EUROPÄISCHE PATENTSCHRIFT

(11) **EP 1 106 441 B1**
(45) Veröffentlichungstag und Bekanntmachung des Hinweises auf die Patenterteilung: **15.10.2008**
(21) Anmeldenummer: 00125624.7
(22) Anmeldetag: 23.11.2000
(51) Int. Cl.: B60R 16/00, B60R 16/02

(54) **Vorrichtung zur Sicherung von Kraftfahrzeugen gegen Manipulation**
System for protecting vehicles against manipulation
Système pour protéger des véhicules contre manipulation

(30) Priorität: 04.12.1999 DE 19958564
(43) Veröffentlichungstag der Anmeldung: 13.06.2001
(73) Patentinhaber: ADAM OPEL AG, 65423 Rüsselsheim (DE)
(72) Erfinder: Diehl, Peter G., Dipl.-Ing., 64521 Gross-Gerau (DE); Nix, Axel, Dipl.-Ing., Utica, MI 48317 (US); Milke, Burkhard, Dr.-Ing., 63071 Offenbach (DE); Saucke, Wolfgang, Dipl.-Ing, 64521 Gross-Gerau (DE)
(74) Vertreter: Daniel, Ulrich W.P.

(56) Entgegenhaltungen:
- EP-A- 0 396 090
- WO-A-99/37510
- DE-A- 19 548 019
- US-A- 5 552 921

## Beschreibung

Die Erfindung bezieht sich auf eine Vorrichtung zur Sicherung von Kraftfahrzeugen gegen Manipulationen mit an einen Fahrzeug-BUS gekoppelten, Daten übertragenden Steuergeräten.

Eine allgemeine Voraussetzung für den Einsatz eines Fahrzeug-BUS ist eine Definition von Daten und Datenformaten, die durch den Fahrzeug-BUS übertragen werden, so dass die einzelnen Daten bzw. Datenblöcke aufgrund spezifischer Kennungen eindeutig werden und die Zuordnung zu einem Busteilnehmer erfolgen kann.

Die DE 195 48 019 A1 offenbart eine Daten-Kommunikationsvorrichtung für ein Fahrzeug zum Empfangen und Ansprechen auf von einer externen Vorrichtung übertragene Daten. Die Daten-Kommunikationsvorrichtung umfasst eine Rechenvorrichtung zur Durchführung einer vorbestimmten mathematischen Operation mit Zufallszahlen und eine Bestimmungsvorrichtung zum Vergleichen erster von der externen Vorrichtung empfangener Daten mit einem Resultat der von der Rechenvorrichtung durchgeführten mathematischen Operation und zur Erzeugung eines Freigabesignals, wenn ein vorbestimmtes Verhältnis zwischen den ersten Daten und dem Resultat gefunden wird.

Im Weiteren sind eine Vorrichtung zur Durchführung eines vorbestimmten Befehls, die auf das Freigabesignal anspricht, und eine Vorrichtung zur Übertragung der Zufallsdaten auf die externe Vorrichtung vorgesehen.

Aus der DE 43 33 474 A1 ist eine Wegfahrsperre für ein Kraftfahrzeug bekannt, wobei das Kraftfahrzeug Steuergeräte aufweist, in denen jeweils ein Kennungscodewort gespeichert ist oder mit Hilfe eines Algorithmus erzeugt wird. Im Weiteren weist das Kraftfahrzeug mindestens eine Prüfeinheit auf, die über eine gemeinsame Datenleitung mit den Steuergeräten verbunden ist, wobei in der Prüfeinheit die Steuergeräte identifizierenden Sollcodeworte gespeichert sind oder mit Hilfe eines Algorithmus errechnet werden. Darüber hinaus sendet die Prüfeinheit zumindest bei jedem Motorstartvorgang ein Anforderungssignal über die Datenleitung an alle oder einen Teil der Steuergeräte, wodurch diese veranlasst werden, ihre Kennungscodeworte zurückzusenden. Die zurückgelieferten Kennungscodeworte werden in der Prüfeinheit mit den Sollcodeworten verglichen und die Prüfeinheit beläßt mindestens ein Steuergerät in einem inaktiven Zustand, so dass das Starten oder das Fahren des Kraftfahrzeugs verhindert wird, falls bei der Abfrage nach dem Kennungscodewort weniger als eine vorbestimmte Anzahl der Steuergeräte mit ihrem Kennungscodeworte antwortet, sowie alle Steuergeräte freigibt, falls bei der Abfrage mindestens die vorbestimmte Anzahl der Steuergeräte mit ihrem Kennungscodewort antwortet. Die mit der Wegfahrsperre über die Datenleitungen gekoppelte Prüfeinheit muss eine erhebliche Rechnerleistung aufweisen, um die angeschlossenen Steuergeräte bzw. deren Kennungscodewörter zu überprüfen und nach einer relativ kurzen Zeitspanne die Wegfahrsperre zu deaktivieren. Die Deaktivierung der Wegfahrsperre erfolgt nicht nach einem Ausfall eines nicht relevanten Steuergerätes, weshalb auch bei einem relativ geringfügigen Defekt, der das Senden eines Kennungscodewortes verhindert, die Wegfahrsperre aktiviert bleibt, da eines der Steuergeräte von der Prüfeinheit nicht identifiziert werden konnte.

Im Weiteren offenbart die DE 43 38 033 A1 ein Diebstahlsicherungssystem für ein Kraftfahrzeug, das ein als Wegfahrsperre ausgebildetes Steuergerät und mindestens ein weiteres, mit der Wegfahrsperre bidirektional verbundenes Steuergerät umfasst. Zur individuellen Zuordnung der Steuergeräte zum jeweiligen Fahrzeug tragen das Steuergerät - Wegfahrsperre und die anderen am System beteiligten, bidirektional miteinander verbundenen Steuergeräte fahrzeugspezifische Identifikationsnummern. Bei jedem Startvorgang des Kraftfahrzeuges müssen die Identifikationsnummern des Steuergerätes - Wegfahrsperre und der anderen Steuergeräte verifiziert werden. Hierbei überwacht jedes Steuergerät die Identifikationsnummern aller anderen im Kraftfahrzeug vorhandenen Steuergeräte, wodurch ein erheblicher Rechen- bzw. Vergleichsaufwand für jedes Steuergerät entsteht und relativ große Datenmengen durch die Datenleitungen übertragen werden müssen, weshalb das gesamte System vergleichsweise langsam arbeitet.

Es ist Aufgabe der Erfindung, eine Vorrichtung zur Sicherung von Kraftfahrzeugen gegen Manipulationen der eingangs genannten Art zu schaffen, die mit einem geringen Hard- und Softwareaufwand Manipulationen innerhalb des Fahrzeug-BUS aufdeckt.

Erfindungsgemäß wird die Aufgabe dadurch gelöst, dass die Steuergeräte den Fahrzeug-BUS auf ein Auftreten gleichartiger, von den Steuergeräten nicht übertragener Daten überwacht und eine Weiterleitung dieser Daten verhindert.

Empfangen die Steuergeräte oder eines der Steuergeräte durch die Verbindung mit dem Fahrzeug-BUS beispielsweise extern generierte Daten, also eine Nachricht, die gleichartig mit eigenen Nachrichten bzw. Daten ist und die es selbst nicht gesendet und/oder generiert hat, liegt eine Manipulation des Fahrzeug-BUS vor und das Steuergerät verhindert eine Weiterleitung dieser Daten, womit die extern generierte Nachricht wirkungslos wird. Die Nachricht, die durch Manipulation auf den BUS gelangt ist, wird entweder vernichtet, indem das die Manipulation erkennende Steuergerät ein diese Nachricht dominierendes/löschendes Signal sendet, oder indem das die Nachricht empfangende Steuergerät diese Nachricht ignoriert, also nicht an ausführende Aktoren weiterleitet. Das Kraftfahrzeug bzw. dessen Elektronik wird somit vor einer sicherheitsrelevanten äußeren Beeinflussung durch das entsprechende Steuergerät selbst geschützt. Die hierbei übertragene Datenmenge ist relativ gering, da das Anhängen zusätzlicher Sicherungsnachrichten an die ohnehin zu übertragenden Daten entfallen kann. Bei Übertragung etwas höherer Datenmengen kann die Manipulationssicherheit des Verfahrens jedoch zusätzlich erhöht werden. Insbesondere können Busnachrichten der Steuergeräte einen fahrzeugindividuellen Anteil erhalten, wodurch es später geringeren Aufwand verursacht, festzustellen, ob eine Nachricht von einem Steuergerät selbst oder von einer externen Quelle stammt. Im Weiteren kann auf das Einbinden aufwendiger Kryptverfahren, Rolling Codes oder ähnlichem und somit auf Software verzichtet werden, wodurch zum einen Speicherplatzbedarf reduziert und zum anderen ein relativ großer Zeitgewinn erzielt wird. Auch eine Zuordnung weiterer, den Fahrzeug-BUS überwachender Hardwarekomponenten entfällt.

Nach einer vorteilhaften Ausgestaltung des Erfindungsgedankens ist das Steuergerät als Wegfahrsperre ausgebildet. Eine von außen einwirkende Manipulation durch das Einspeisen entsprechender Daten in den Fahrzeug-BUS zur Deaktivierung oder Umgehung der Wegfahrsperre, wird demnach von der Wegfahrsperre vereitelt, da dieses Steuergerät feststellt, dass die Daten zwar seine Kennung tragen, also Nachrichten von ihm sein könnten, aber nicht von ihm in den Fahrzeug-BUS eingespeist wurden. Das Steuergerät kann jedoch beispielsweise auch als Türsteuergerät oder als Klimasteuergerät ausgebildet sein.

Bei einer alternativen Ausbildung der Erfindung steht das Steuergerät mit mindestens einem Türmodul in Verbindung. Bevorzugt steht das Steuergerät mit einem Fahrertürmodul in Verbindung. Beispielsweise bedingt eine Entriegelung des Fahrertürmoduls das Senden entsprechender Daten über den Fahrzeug-BUS an das zugeordnete Steuergerät, das anschließend neben der Entriegelung des Fahrertürmoduls auch eine Entriegelung aller anderen Türmodule des Kraftfahrzeuges veranlasst. Werden die Daten zur Entriegelung des Fahrertürmoduls von außen in den Fahrzeug-BUS eingespeist, erkennt das zuständige Steuergerät, dass diese Daten nur von ihm stammen können aber nicht von ihm abgesandt wurden, wonach keine Entriegelung des Fahrertürmoduls und der anderen Türmodule erfolgt.

Nach einer weiteren alternativen Ausgestaltung der Erfindung ist das Steuergerät mit einem Zündschloß gekoppelt. Somit wird das elektronische Umgehen des Zündschlosses mittels extern erzeugter Daten ausgeschlossen.

Ein relativ hoher Sicherheitsstandard mit einem entsprechend wirksamen Schutz vor Manipulationen wird zweckmäßigerweise dadurch erzielt, dass jedes der Steuergeräte mit dem Fahrzeug-BUS gekoppelt ist und den Fahrzeug-BUS hinsichtlich eines Auftretens gleichartiger, von ihm nicht übertragener Daten überwacht. Wenn alle sicherheitsrelevaten Steuergeräte das Auftreten ihrer eigenen Daten innerhalb des Fahrzeug-BUS überwachen und eine externe Einspeisung identischer Daten verhindern, ist ein Außerkraftsetzen oder eine Umgehung der Elektronik des Kraftfahrzeuges nahezu ausgeschlossen.

Bevorzugt sendet bzw. senden das oder die Steuergeräte beim Auftreten gleichartiger, von ihm bzw. ihnen nicht übertragener Daten, Signale in den Fahrzeug-BUS, die die von ihm bzw. ihnen nicht übertragenen Daten löschen oder unbrauchbar machen. Die Signale weisen hierbei einen dominanten Pegel auf, der eine Zerstörung der unberechtigt eingespeisten Daten, bzw. Nachrichten bewirkt.

Um eine nach außen wirkende Abschreckung zu erzielen, aktiviert bzw. aktivieren das oder die Steuergeräte beim Auftreten gleichartiger, von ihm nicht übertragener Daten eine Diebstahlwarnanlage.

Zweckmäßigerweise aktiviert bzw. aktivieren das oder die Steuergeräte beim Auftreten gleichartiger, von ihm nicht übertragener Daten eine Wegfahrsperre. Dies erfolgt mittels entsprechender Datenübertragung über den Fahrzeug-BUS, mit dem die Steuergeräte gekoppelt sind. Somit ist das Kraftfahrzeug während des Auftretens unberechtigter externer Daten innerhalb des Fahrzeug-BUS permanent für einen zu definierenden Zeitraum elektronisch gesichert.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

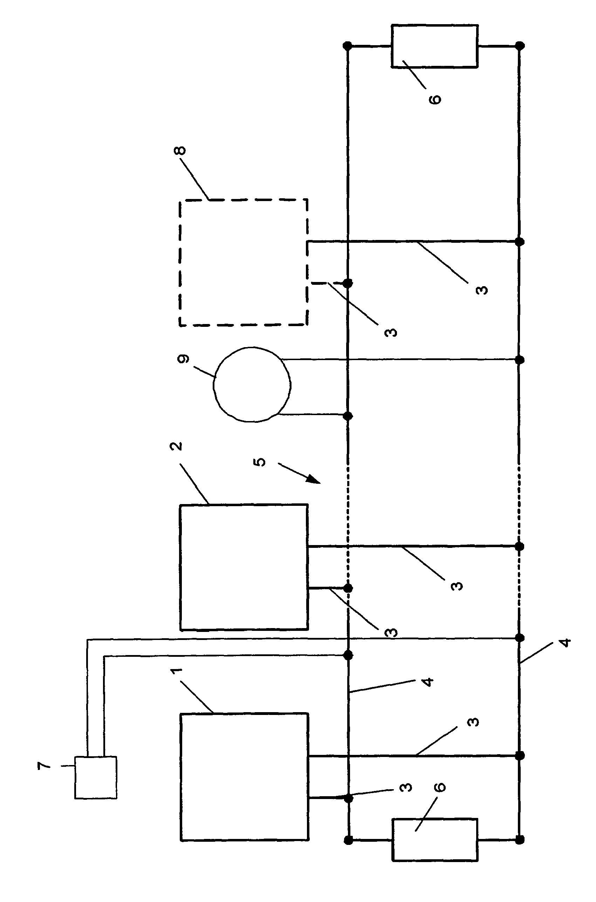

Die Erfindung wird im folgenden anhand eines Ausführungsbeispieles unter Bezugnahme auf die zugehörige Zeichnung näher erläutert. Die einzige Fig. zeigt eine schematische Darstellung der erfindungsgemäßen Vorrichtung zur Sicherung von Kraftfahrzeugen gegen Manipulationen.

Die Vorrichtung zur Sicherung von Kraftfahrzeugen gegen Manipulationen umfasst zwei Steuergeräte 1, 2, die über Verbindungsleitungen 3 mit parallelen Datenleitungen 4 eines Fahrzeug-BUS 5 in Verbindung stehen, das zwischen den Datenleitungen 4 eingesetzte Abschlusswiderstände 6 aufweist.

Das erste Steuergerät 1 steht über den Fahrzeug-BUS 5 mit einem Fahrertürmodul 7 in Verbindung und sendet nach Empfangen eines entsprechenden Signals von dem Fahrertürmodul 7 Daten über den Fahrzeug-BUS 5, um ein Entriegeln des Fahrertürmoduls 7 sowie der anderen in einem Kraftfahrzeug vorhandenen Türmodule zu bewirken. Erfolgt nun die Signalgebung zur Entriegelung des Fahrertürmoduls 7 und der anderen Türmodule durch ein externes Steuergerät 8, erkennt das Steuergerät 1, dass die entsprechende Nachricht, die seiner Kennung entspricht, nicht von ihm gesendet wurde und speist zur Zerstörung dieser Nachricht bzw. Daten einen dominanten Signalpegel in den Fahrzeug-BUS 5 ein. Die Kennung des Steuergerätes 1 könnte auch einen fahrzeugindividuellen Anteil (Fest- oder Wechselcode) enthalten, so dass bei einem Vergleich mit Daten von einem externen Sender (Steuergerät 8) sofort erkannt würde, dass Daten nicht vom Steuergerät 1 stammen. Im Weiteren erfolgt nach erkannter Manipulation eine Datenübertragung an das als Wegfahrsperre ausgebildete Steuergerät 2, worauf dieses zumindest temporär aktiviert wird. Zusätzlich wird eine mit dem Fahrzeug-BUS 5 gekoppelte Diebstahlwarnanlage 9 zumindest zeitweise aktiviert.

Aufgrund der Erkennung einer unberechtigten Einspeisung von Daten durch das Steuergerät 1 und der Vereitelung der Folgen durch ein Löschen bzw. Zerstören der extern generierten Daten, wird eine Manipulation des Kraftfahrzeuges bzw. der Elektronik des Kraftfahrzeuges von außen verhindert.

## Patentansprüche

1. Vorrichtung zur Sicherung von Kraftfahrzeugen gegen Manipulationen mit an einen Fahrzeug-BUS (5) gekoppelten, Daten übertragenden Steuergeräten (1, 2), **dadurch gekennzeichnet, dass** das Steuergerät (1, 2) den Fahrzeug-BUS (5) auf ein Auftreten gleichartiger, von dem Steuergerät (1, 2) nicht übertragener Daten überwacht und eine Weiterleitung dieser Daten verhindert.

2. Vorrichtung zur Sicherung von Kraftfahrzeugen gegen Manipulation nach Anspruch 1, **dadurch gekennzeichnet, dass** das Steuergerät (1, 2) Daten mit einer steuergerätespezifischen und/oder fahrzeugspezifischen Kennung an den Fahrzeug-BUS weitergibt.

3. Vorrichtung zur Sicherung von Kraftfahrzeugen gegen Manipulationen nach Anspruch 1, **dadurch gekennzeichnet, dass** das Steuergerät (2) als Wegfahrsperre ausgebildet ist.

4. Vorrichtung zur Sicherung von Kraftfahrzeugen gegen Manipulationen nach Anspruch 1, **dadurch gekennzeichnet, dass** das Steuergerät (1) mit mindestens einem Türmodul in Verbindung steht.

5. Vorrichtung zur Sicherung von Kraftfahrzeugen gegen Manipulationen nach Anspruch 4, **dadurch gekennzeichnet, dass** das Steuergerät (1) mit einem Fahrertürmodul (7) in Verbindung steht.

6. Vorrichtung zur Sicherung von Kraftfahrzeugen gegen Manipulationen nach Anspruch 1, **dadurch gekennzeichnet, dass** das Steuergerät mit einem Zündschloß gekoppelt ist.

7. Vorrichtung zur Sicherung von Kraftfahrzeugen gegen Manipulationen nach einem der Ansprüche 1 bis 6, **dadurch gekennzeichnet, dass** jedes der Steuergeräte (1, 2) mit dem Fahrzeug-BUS (5) gekoppelt ist und den Fahrzeug-BUS (5) hinsichtlich eines Auftretens gleichartiger, von ihm nicht übertragener Daten überwacht.

8. Vorrichtung zur Sicherung von Kraftfahrzeugen gegen Manipulationen nach einem der Ansprüche 1 bis 7, **dadurch gekennzeichnet, dass** das oder die Steuergeräte (1, 2) beim Auftreten gleichartiger, von ihm bzw. ihnen nicht übertragener Daten, Signale in den Fahrzeug-BUS (5) sendet bzw. senden, die die von ihm bzw. ihnen nicht übertragenen Daten löschen oder unbrauchbar machen.

9. Vorrichtung zur Sicherung von Kraftfahrzeugen gegen Manipulationen nach einem der Ansprüche 1 bis 8, **dadurch gekennzeichnet, dass** das oder die Steuergeräte (1, 2) beim Auftreten gleichartiger, von ihm bzw. ihnen nicht übertragener Daten, eine Diebstahlwarnanlage (9) aktiviert bzw. aktivieren.

10. Vorrichtung zur Sicherung von Kraftfahrzeugen gegen Manipulationen nach einem der Ansprüche 1 bis 9, **dadurch gekennzeichnet, dass** das oder die Steuergeräte (1, 2) beim Auftreten gleichartiger, von ihm bzw. ihnen nicht übertragener Daten eine Wegfahrsperre zumindest zeitweise aktiviert bzw. aktivieren.

## Claims

1. System for protecting vehicles against manipulation with control devices (1, 2) coupled with a bus of a motor vehicle (5) and transmitting data, **characterized in that** the control device (1, 2) controls the bus of the motor vehicle (5) and checks if there are identical data not transmitted by the control device (1, 2) avoiding the transmission of these data.

2. System for protecting vehicles against manipulation according to claim 1, **characterized in that** the control device (1, 2) transmits data having a control device specific and/or motor vehicle specific designation to the bus of the motor vehicle.

3. System for protecting vehicles against manipulation according to claim 1, **characterized in that** the control device (2) is designed as anti-theft device.

4. System for protecting vehicles against manipulation according to claim 1, **characterized in that** the control device (1) is connected with at least one door module.

5. System for protecting vehicles against manipulation according to claim 4, **characterized in that** the control device (1) is connected with a driver's door module (7).

6. System for protecting vehicles against manipulation according to claim 1, **characterized in that** the control device is coupled with a starter lock.

7. System for protecting vehicles against manipulation according to one of the claims 1 to 6, **characterized in that** every control device (1, 2) is coupled with the bus of the motor vehicle (5) and checks if in the bus of the motor vehicle (5) there are identical data not transmitted by it.

8. System for protecting vehicles against manipulation according to one of the claims 1 to 7, **characterized in that** the control device or the control devices (1, 2) in case there are identical data not transmitted by it sends or send signals to the bus of the motor vehicle (5) wherein these signals delete not transmitted data or make them useless.

9. System for protecting vehicles against manipulation according to one of the claims 1 to 8, **characterized in that** the control device or the control devices (1, 2) in case there are identical data not transmitted by it activates or activate the anti-theft alarm system (9).

10. System for protecting vehicles against manipulation according to one of the claims 1 to 9, **characterized in that** the control device or the control devices (1, 2) in case there are identical data not transmitted by it activates or activate at least an intermittent anti-theft device.

## Revendications

1. Dispositif pour la protection des véhicules automobiles interdisant les falsifications intentionnelles liées à un véhicule AUTOBUS (5), pour la transmission de données des appareils de commande (1, 2), **caractérisé en ce que** l'appareil de commande (1, 2) contrôle le véhicule AUTOBUS (5) en cas d'une présentation de même type de cet appareil de commande (1, 2) dont les données ne sont pas transmises et empêche un transfert de ces données.

2. Dispositif pour la protection des véhicules automobiles interdisant les falsifications intentionnelles selon revendication 1, **caractérisé en ce que** l'appareil de commande (1, 2) transmette des données au véhicule AUTOBUS avec une identification (code) spécifique à l'appareil de commande et / ou spécifique au véhicule.

3. Dispositif pour la protection des véhicules automobiles interdisant les falsifications intentionnelles selon revendication 1, **caractérisé en ce que** l'appareil de commande (2) se présente comme un dispositif d'immobilisation.

4. Dispositif pour la protection des véhicules automobiles interdisant les falsifications intentionnelles selon revendication 1, **caractérisé en ce que** l'appareil de commande (1) soit relié au moins à un module de portière.

5. Dispositif pour la protection des véhicules automobiles interdisant les falsifications intentionnelles selon revendication 4, **caractérisé en ce que**, l'appareil de commande (1) soit relié à un module d'ouverture de portière côté chauffeur (7).

6. Dispositif pour la protection des véhicules automobiles interdisant les falsifications intentionnelles selon revendication 1, **caractérisé en ce que**, l'appareil de commande soit relié à un interrupteur d'allumage (antivol).

7. Dispositif pour la protection des véhicules automobiles interdisant les falsifications intentionnelles selon revendications 1 à 6, **caractérisé en ce que** chacun des appareils de commande (1, 2} soit relié au véhicule AUTOBUS (5) et, en cas d'une présentation de même type, contrôle le véhicule AUTOBUS (5), duquel les données ne sont pas transmises.

8. Dispositif pour la protection des véhicules automobiles interdisant les falsifications intentionnelles selon revendications 1 à 7, **caractérisé en ce que** le ou les appareils de commande (1, 2), en cas d'une présentation de même type, n'envoie/n'envoient pas des données non transmises ou des signaux au véhicule AUTOBUS (5); ceux-ci n'effacent pas ou ne mettent pas hors d'usage ces données non transmises par celui-ci/ceux-ci.

9. Dispositif pour la protection des véhicules automobiles interdisant les falsifications intentionnelles selon revendications 1 à 8, **caractérisé en ce que** le ou les appareils de commande (1, 2), en cas d'une présentation de même type, à partir duquel/desquels les données ne sont pas transmises, active/activent un dispositif d'alarme antivol(9).

10. Dispositif pour la protection des véhicules automobiles interdisant les falsifications intentionnelles selon revendications 1 à 9, **caractérisé en ce que** le ou les appareils de commande (1, 2), en cas d'une présentation de même type, à partir duquel/desquels les données ne sont pas transmises, active/activent un verrouillage de démarrage, du moins temporairement.
